# EUROPEAN PATENT SPECIFICATION

(11) **EP 4 279 347 B1**
(45) Date of publication and mention of the grant of the patent: **28.05.2025**
(21) Application number: 22180302.6
(22) Date of filing: 22.06.2022
(51) Int. Cl.: B60T 17/04, B60T 17/08

(54) **AN AIR CONNECTION APPARATUS**
LUFTANSCHLUSSVORRICHTUNG
APPAREIL DE CONNEXION D'AIR

(30) Priority: 17.05.2022 TR 202207995
(43) Date of publication of application: 22.11.2023
(73) Proprietor: Arfesan Arkan Fren Elemanlari Sanayi Ve Ticaret A.S., 41480 Kocaeli (TR)
(72) Inventor: BATTAL, Yavuz, KOCAELI (TR); ARKAN, FUAT BURTAN, KOCAELI (TR); ULUTAS, MURAT, KOCAELI (TR)
(74) Representative: Inal, Aysegul Seda

(56) References cited:
- EP-A1- 1 106 897
- WO-A1-2008/055532
- WO-A1-2018/002824
- WO-A2-2015/028535
- DE-U1- 20 100 803
- DE-U1- 202021 101 628
- US-A- 4 105 226
- US-A- 4 884 829

## Description

### Technical Field of the Invention

The invention relates to a connection apparatus to provide air connection for the spring brake chamber and to a spring brake chamber comprising said connection apparatus.

### The State of Art of the Invention

The spring brake chambers are frequently used in heavy commercial vehicles such as trucks, tow trucks, trailers, and buses. The spring brake chamber is a system that directly drives the braking mechanism and is a pneumatic brake solution. The said system includes two rooms, the service and the emergency room. In the first of these rooms, there is a service diaphragm, the brake actuating shaft extending out of the room and connected to the diaphragm, and a spring placed on the actuating shaft. When the driver puts on the brake, the air from the air source starts the braking by pushing the diaphragm and thus the actuating shaft, and when the driver releases the brake, the air is evacuated and brings the actuating shaft to the first position with the spring diaphragm. In the second room, there is pressure air under normal conditions. The second room also contains an actuating arm extending into the primary room, a diaphragm connected to the actuating arm, and a secondary spring stronger than the spring in the first room. When the driver releases the parking brake or in case of any air leakage, the air in the secondary room is evacuated and the secondary spring pushes an actuating arm extending into the primary room with high force, and this actuating arm starts the braking by pushing the actuating arm in the first room.

US4105226A discloses a coupling ring for use in snap-in fittings of the type including male and female connector elements, the male connector element including a ring-retaining channel and the female connector element including locking grooves.

The document with publication number DE20100803U1 discloses a spring brake chamber. Said spring brake chamber is arranged according to the foregoing basic working principle given above. The air connection of the spring brake chamber is provided by a connection element connected to the air inlets on the brake chamber. Said connection element is connected to the air inlet with a screw placed from the end part.

Screwed assembly is performed by applying torque. This torque application may cause damage to the screw threads and also damage the o-rings placed to seal the air inlet. Also, it is known that screwed systems can get loose with axial and radial vibrations occurring during the operation of the vehicle. In such a case, the spring chamber will lose its function and cause safety problems.

In applications with screw, it is also possible for the user to disassemble on his/her own. However, this process is extremely dangerous for normal users. If appropriate safety measures are not taken before disassembly, the strong spring in the secondary room of the spring brake chambers can push the actuating shafts out with great force or it can fly off, which poses a great danger.

In addition, air connection systems are not normally provided with release bolts, and accordingly, there is a need for a compact product.

As a consequence, all the above-mentioned problems made it necessary to make an innovation in the relevant field.

### Summary and Objects of the Invention

The main object of the present invention is to provide the structure of an air connection apparatus that can be easily connected to the spring brake chamber without the need for torque application, also which will not be affected by the vibrations occurring during the operation of the vehicle and cannot be disassembled by the user. Accordingly, the present air connection apparatus comprises at least one airline, one end of which is arranged to be an air connection head to be connected to an air source and another end of which is arranged to be a chamber connection head to be connected to the spring brake chamber and is angled in respect to the air connection head, which is provided at an angle to the air connection head, and which includes at least one an air channel extending from the chamber connection head to the air connection head to allow air passage,
a primary channel formed in the outer diameter of said chamber connection head to allow a circlip to be inserted.

Thus, unlike the torque applications of the air connection apparatus, it is allowed to insert a circlip in the primary channel and therefore, it is allowed to mount the air connection apparatus by pushing it axially into the air inlet of the spring brake chamber. Here, the circlip provides a click-on assembly between the spring brake chamber and the air connection apparatus, and this click-on system also prevents users from removing the air connection apparatus by showing a locking function.

A preferred embodiment of the invention includes a sealing channel formed in the outer diameter of the said chamber connection head to allow a sealing element to be placed, and accordingly, the sealing of the spring brake chamber is increased.

A preferred embodiment of the invention includes two air lines. Accordingly, the air connection apparatus can allow air to enter both rooms of the spring brake chamber, and both connections can be provided with a single assembly move.

A preferred embodiment of the invention includes at least one connection hole on the said connection support. The connection hole allows the stud connection elements to connect the air connection apparatus to the spring brake chamber.

A preferred embodiment of the invention includes a release bolt slot on the said connection support. Thus, extra space is provided for the housing of the release bolt with slots for carrying the release bolt thereon.

### Definitions of Figures Explaining the Invention

The figures and related explanations used to better explain the device developed with this invention are below.
**Figure 1****.** Isometric view of air connection apparatus with release bolt slot
**Figure 2****.** Isometric view of the disassembled air connection apparatus and spring brake chamber
**Figure 3****.** Sectional view of the air line of the air connection apparatus
**Figure 4****.** Side view of the assembled air connection apparatus and spring brake chamber.
Here, the chamber connection head and air inlet are provided in sectional view.
**Figure 5****.** Detail view of Figure 4
**Figure 6****.** Top view of the air connection apparatus
**Figure 7****.** Top view of another embodiment of the air connection apparatus
**Figure 8****.** Sectional view of the spring air chamber

### Definitions of Elements/Pieces/Parts Forming the Invention

To explain the device developed with this invention better, the parts and pieces in the figures are numbered and the corresponding of each number is given below.
**1.** Air Connection Apparatus
**2.** Chamber Connection Head
   **2a.** Air Connection Head
**3.** Nut Head
**4.** Screw Thread
**5.** Air Line
**6.** Primary channel
   **6a.** Circlip
**7.** Air Channel
**8.** Sealing channel
   **8a.** Sealing element
**9.** Connection Hole
   **9a.** Stud connection element
   **9b.** Secondary connection element
**10.** Connection Support
**10a.** Release bolt slot
**11.** Release bolt
**12.** Spring Brake Chamber
   **12a.** Air inlet
   **12b.** Secondary channel
**A.** Adapter plate
**C1.** Primary room
**C2.** Secondary room
**D.** Diaphragm
**S1.** Primary spring
**S2.** Secondary spring
**T1.** Primary actuating arm
**T2.** Secondary actuating arm

### Detailed Description of the Invention

The subject of the invention relates to a connection apparatus (1) to provide air connection for the spring brake chamber (12) and to a spring brake chamber (12) comprising said connection apparatus (1).

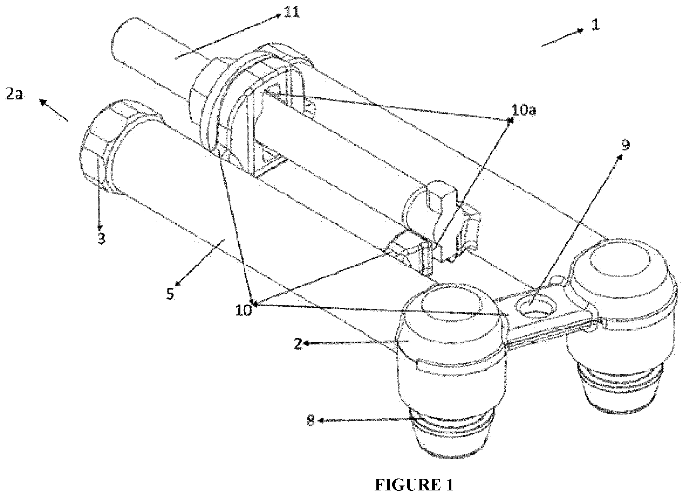

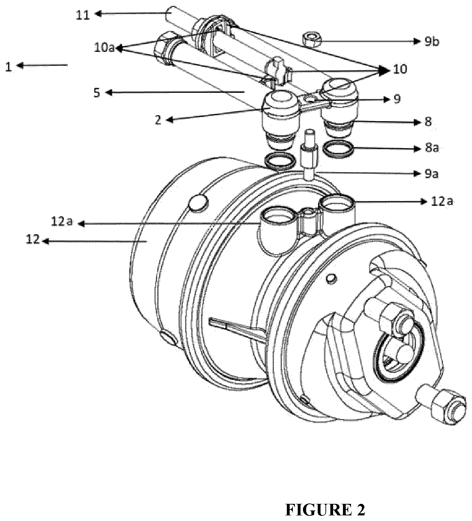

With reference to Figures 1 and 2, the air connection element (1) comprises at least one, preferably two air lines (5). Said air line (5) is preferably provided in the form of a cylindrical tube. One end of the said air line (5) is connected to the spring brake chamber (12) with the chamber connection head (2) and its other end is connected to an air source (not shown in the figures) with the air connection head (2a).

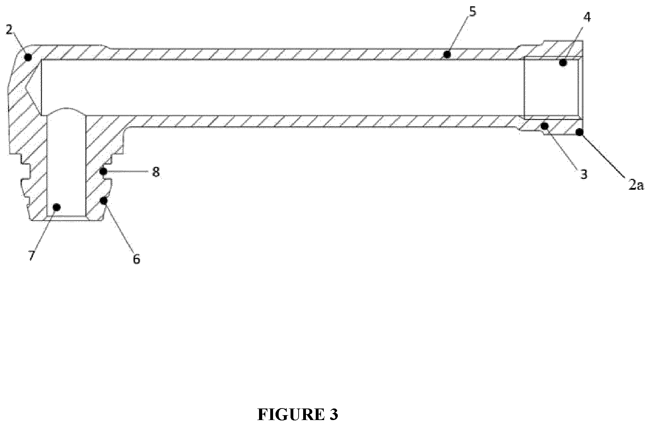

With reference to Figure 3, the said air line (5) is arranged as an air channel (7) to allow air passage to the inner part. The air channel (7) extends from the air connection head (2a) towards the chamber connection head (2). Said chamber connection head (2) and air connection head (2a) are provided at an angle, preferably perpendicular to each other. An approximate "L" shape is provided. The air channel (7) is arranged such that the part passing through the chamber connection head (2) is at an angle to the remaining part in accordance with this geometry.

To connect the air connection head (2a) to the pipes of the air source, there may be screw threads (4) in the inner diameter of the head and its outer diameter can be formed as a nut head (3). If required, both or only one of the nut head (3) and screw threads (4) can be used.

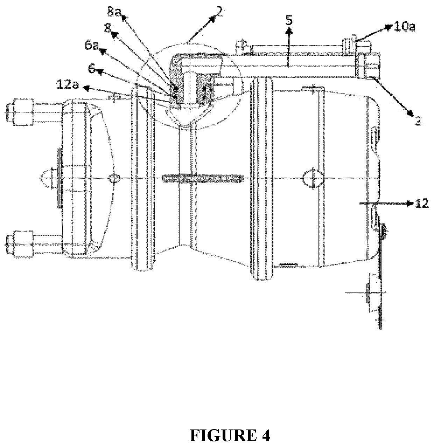

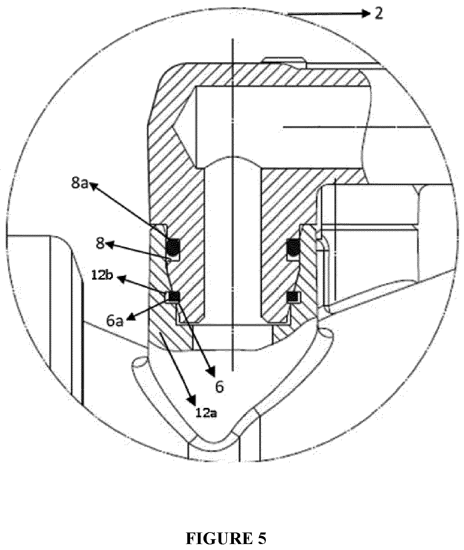

With reference to Figures 4 and 5, the chamber connection head (2) of the said air connection apparatus (1) is inserted into the air inlet (12a) of the spring brake chamber (12). The spring brake chamber (12) includes two air inlets (12a), and as will be explained later, each air inlet (12a) is provided in connection with a room of the spring brake chamber (12). The air inlets (12a) are structures extending vertically from the surface of the spring brake chamber (12). Since the chamber connection head (2) is angled, preferably perpendicular to the remaining part of the air line (5), it can be fixed by being pushed in the axial direction to the air inlet (12a).

As can be seen especially in Figure 5, a primary channel (6) is arranged in the outer diameter of the end part of the chamber connection head (2). The primary channel (6) has a structure deepening in the radial direction on the surface of the chamber connection head (2) and it is configured to accommodate a circlip (6a). Said circlip (6a) can be either found ready on the air connection apparatus (1) or it can be inserted during assembly. When the circlip (6a) is inserted into the primary channel (6) and the chamber connection head (2) is pushed into the air inlet (12a), the circlip (6a) fastens the air connection apparatus (1) to the spring brake chamber (12) by being compressed between the primary channel (6) and the inner surface of the air inlet (12a). Although no torque is applied, the user cannot move the chamber connection head (2) out of the air inlet (12a) due to the positioning of the circlip (6a).

Preferably, a secondary channel (12b) can be formed on the inner surface of the air inlet (12a) as well as the primary channel (6). When the chamber connection head (2) is completely inserted into the air inlet (12a), said secondary channel (12b) is positioned to be opposite the primary channel (6). Thus, the outer diameter of the circlip (6a) fits inside the secondary channel (12b), and the radial movement of the circlip (6a) in the radial direction is prevented by the walls of the secondary channel (12b), and accordingly, a more stable structure with stronger locking feature has been provided.

In a preferred embodiment, a sealing channel (8) is arranged in the outer diameter of the end part of the chamber connection head (2). Preferably, the sealing channel (8) is located on the primary channel (6) in the radial direction, that is, in the part away from the spring brake chamber (12).

The sealing channel (8) has a structure deepening in the radial direction on the surface of the chamber connection head (2) and it is configured to accommodate a sealing element (8a). Said sealing element (8a) can be either found ready on the air connection apparatus (1) or it can be inserted during assembly. When the sealing element (8a) is inserted into the sealing channel (8) and the chamber connection head (2) is pushed into the air inlet (12a), the sealing element (8a) is compressed between the sealing channel (8) and the inner surface of the air inlet (12a) and prevents possible air leakages that may occur at the air inlet (12a).

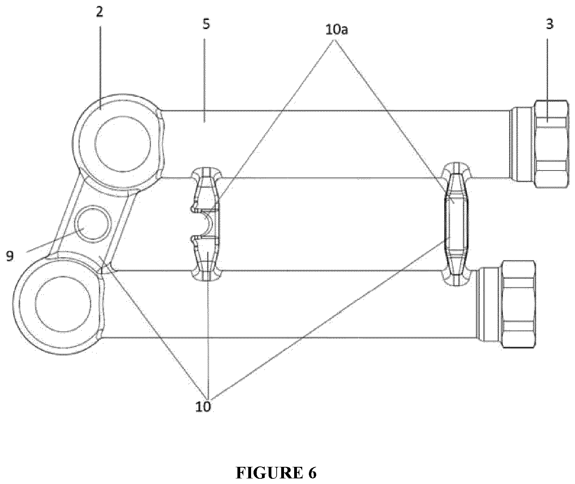

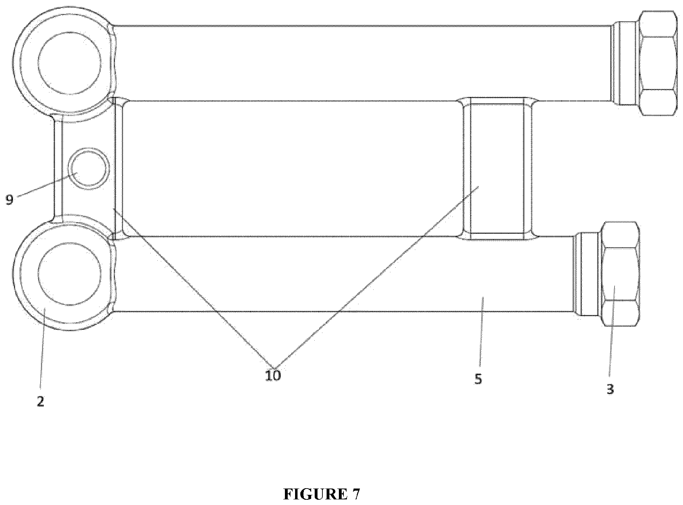

With reference to Figures 1, 2, 6 and 7, as previously stated, the air connection apparatus (1) may comprise two air lines (5). Preferably, these two air lines (5) are conjugated with each other.

The air lines (5) are fixedly connected by at least one connection support (10). There may be a connection hole (9) and/or a release bolt slot (10a) on the said connection support (10).

The connection hole (9) allows the air connection apparatus (1) to connect to the spring brake chamber (12) via a stud connection element (9a) and the second connection element (9b). The stud connection element (9a) and the second connection element (9b) may be selected as a stud screw and nut, respectively. One end of the stud screw is inserted into the slot on the spring brake chamber (12), and then the other end is passed through the connection hole (9) and then the nut is mounted on this end.

The release bolt slot (10a) allows the release bolt (11) to be placed directly in the air connection apparatus (1). The release bolt (11) is in the form of a longitudinal shaft and may contain threads extending in the radial direction at its end part. The release bolt (11) is positioned parallel to the air line (5). The release bolt slot (10a) includes an opening perpendicular to the connection support (10) for the said longitudinal part to pass through, and the release bolt (11) is passed through here.

Also, another opening can be arranged on the surface of another connection support (10) as a secondary release bolt slot (10a). The radial thread of the release bolt (11) previously described fits into this secondary opening.

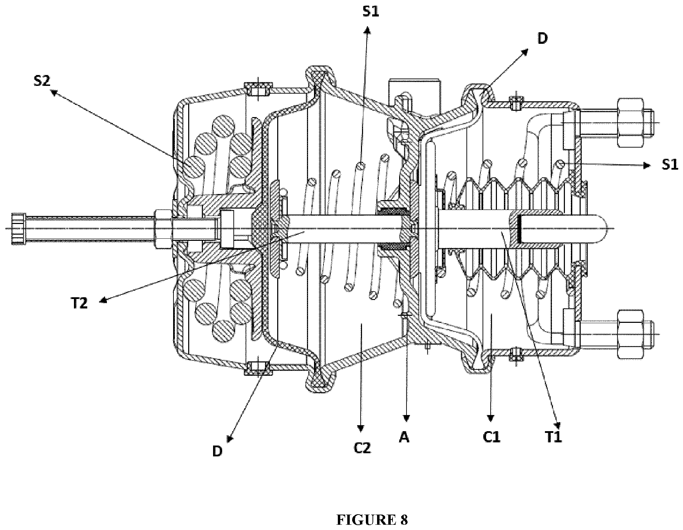

With reference to Figure 8, said connection apparatus (1) is connected to a spring brake chamber (12). The inner body part of the spring brake chamber (12) is divided into two parts with an adapter plate (A), the primary room (C1) and the secondary room (C2). One of the two said air inlets (12a) is connected to the primary room (C1) and the other to the secondary room (C2).

A diaphragm (D) is located in the primary room (C1). Said diaphragm (D) can move with the air from the air inlet (12a). There is a primary actuating arm (T1) connected to one face of the diaphragm (D). The other end of the primary actuating arm (T1) projects from an opening on the body. A primary spring (S1) is placed on the primary actuating arm (T1).

When the driver presses the brake pedal, air fills between the adapter plate (A) and the diaphragm (D), and accordingly, the diaphragm (D) pushes the primary actuating arm (T1) out from the opening. The pushed primary actuating arm (T1) triggers the brake mechanism. When the driver releases the brake pedal, the air between the diaphragm (D) and the adapter plate (A) is evacuated and the primary spring (S1) ends braking by pushing the diaphragm (D) and thus the primary actuating arm (T1) to its first position.

There is also a diaphragm (D) in the secondary room (C2). There is a secondary actuating arm (T2) between this diaphragm (D) and adapter plate (A). One end of the said secondary actuating arm (T2) is connected to the diaphragm (D), and the other end extends to the primary room (C1) by passing through the adapter plate (A). A secondary spring (S2) is positioned from the other side of the diaphragm (D). The secondary spring (S2) is chosen to apply more force than the primary spring (S1). In addition, a primary spring (S1) can also be located between the adapter plate (A) and the diaphragm (D) in the second room (C2).

The secondary room (C2) is normally filled with air and this air compresses the secondary spring (S2) by pushing the diaphragm (D) and prevents the secondary actuating arm (T2) from advancing through the primary room. When the driver presses the parking brake button or there is air leakage in the system, the air in the secondary room (C2) is evacuated and the diaphragm (D) cannot hold the secondary spring (S2). In this case, the secondary spring (S2) moves the secondary actuating arm (T2) by pushing the diaphragm (D), and accordingly, the secondary actuating arm (T2) actuates the brake mechanism by pushing the diaphragm (D) in the primary room (C1) and thus the primary actuating arm (T1).

## Claims

1. A spring brake chamber (12) having two air connection apparatus (1) for connecting the air sources to a spring air chambers (12) by air inlets (12a) of the spring brake chamber (12), **characterized by**
▪ The air connection apparatus (1) comprises at least one air line (5), one end of which is arranged to be an air connection head (2.a) to be connected to an air source and other end of which is arranged to be a chamber connection head (2) to be connected to the spring brake chamber (12) and is angled in respect to the air connection head (2.a), and which includes at least one an air channel (7) extending from the chamber connection head (2) to the air connection head (2.a) to allow air passage, a primary channel (6) formed in the outer diameter of said chamber connection head (2) to allow a circlip (6a) to be inserted,
▪ at least one connection support (10) connecting two air lines (5) and at least one connection hole (9) on the connection support (10) to allows the air connection apparatus (1) to connect to the spring brake chamber (12) by a stud connection element (9a) and the second connection element (9b),
▪ a secondary channel (12b) formed on the inner surface of the air inlet (12a) wherein the said secondary channel (12b) is positioned to be opposite the primary channel (6), when the chamber connection head (2) is completely inserted into the air inlet (12a).

2. A spring brake chamber (12) according to claim 1, **characterized in that** the chamber connection head (2) is perpendicular in respect to the air connection head (2.a).

3. A spring brake chamber (12) according to claim 1, **characterized in that** it comprises a sealing channel (8) formed in the outer diameter of said chamber connection head (2) to allow a sealing element (8a) to be inserted.

4. A spring brake chamber (12) according to claim 3, **characterized in that** it comprises a sealing element (8a) located in the sealing channel (8).

5. A spring brake chamber (12) according to claim 4, **characterized in that** the sealing element (8a) is an O-ring.

6. A spring brake chamber (12) according to claim 1, **characterized in that** it comprises a circlip (6a) located in the primary channel (6).

7. A spring brake chamber (12) according to claim 1, **characterized in that** it comprises at least two connection supports (10).

8. A spring brake chamber (12) according claim 1 or 7, **characterized in that** it comprises a release bolt slot (10.a) on the connection support (10).

9. A spring brake chamber (12) according to any one of claims 1, 7 or 8, , **characterized in that** it comprises at least three connection supports (10).

10. A spring brake chamber (12) according to claim 9, **characterized in that** it comprises two connection supports (10) with the release bolt slot (10.a) and one connection support with the connection hole (9).

11. A spring brake chamber (12) according to any one of claims 1-3 or 7-10, **characterized in that** it is one-piece.

## Patentansprüche

1. Eine Federbremskammer (12) mit zwei Luftverbindungseinrichtungen (1) zum Verbinden der Luftquellen mit einer Federluftkammer (12) über Lufteinlässe (12a) der Federbremskammer (12), **gekennzeichnet durch**
▪ Die Luftverbindungseinrichtung (1) umfasst mindestens eine Luftleitung (5), deren eines Ende als Luftanschlusskopf (2.a) ausgebildet ist, der mit einer Luftquelle verbunden werden kann, und deren anderes Ende als Kammerverbindungskopf (2) ausgebildet ist, der mit der Federbremskammer (12) verbunden werden kann und in Bezug auf den Luftanschlusskopf (2.a) abgewinkelt ist, und die mindestens einen Luftkanal (7) umfasst, der sich von dem Kammerverbindungskopf (2) zu dem Luftanschlusskopf (2.a) erstreckt, um einen Luftdurchgang zu ermöglichen, einen Primärkanal (6), der in dem Außendurchmesser des Kammerverbindungskopfes (2) ausgebildet ist, um das Einführen eines Sicherungsrings (6a) zu ermöglichen,
▪ Mindestens eine Verbindungsunterstützung (10), die zwei Luftleitungen (5) und mindestens ein Verbindungsloch (9) an der Verbindungsunterstützung (10) verbindet, damit die Luftverbindungsvorrichtung (1) über ein Stiftverbindungselement (9a) und das zweite Verbindungselement (9b) mit der Federbremskammer (12) verbunden werden kann.
▪ Ein sekundärer Kanal (12b), der an der Innenfläche des Lufteinlasses (12a) ausgebildet ist, wobei der sekundäre Kanal (12b) so positioniert ist, dass er dem primären Kanal (6) gegenüberliegt, wenn der Kammerverbindungskopf (2) vollständig in den Lufteinlass (12a) eingeführt ist.

2. Federbremskammer (12) nach Anspruch 1, **dadurch gekennzeichnet, dass** der Kammerverbindungskopf (2) senkrecht zum Luftanschlusskopf (2.a) steht.

3. Eine Federbremskammer (12) gemäß Anspruch 1, **dadurch gekennzeichnet, dass** sie einen Dichtungskanal (8) umfasst, der im Außendurchmesser des Kammerverbindungskopfes (2) ausgebildet ist, um das Einsetzen eines Dichtungselements (8a) zu ermöglichen.

4. Eine Federbremskammer (12) gemäß Anspruch 3, **dadurch gekennzeichnet, dass** sie ein Dichtungselement (8a) umfasst, das in dem Dichtungskanal (8) angeordnet ist.

5. Eine Federbremskammer (12) gemäß Anspruch 4, **dadurch gekennzeichnet, dass** das Dichtungselement (8a) ein O-Ring ist.

6. Eine Federbremskammer (12) gemäß Anspruch 1, **dadurch gekennzeichnet, dass** sie einen Sicherungsring (6a) umfasst, der im Primärkanal (6) angeordnet ist.

7. Eine Federbremskammer (12) gemäß Anspruch 1, **dadurch gekennzeichnet, dass** sie mindestens zwei Verbindungsunterstützung (10) umfasst.

8. Eine Federbremskammer (12) gemäß Anspruch 1 oder 7, **dadurch gekennzeichnet, dass** sie einen Auslöseschlitz (10.a) an dem Verbindungsunterstützung (10) aufweist.

9. Eine Federbremskammer (12) gemäß einem der Ansprüche 1, 7 oder 8, **dadurch gekennzeichnet, dass** sie mindestens drei Verbindungsunterstützungen (10) umfasst.

10. Eine Federbremskammer (12) gemäß Anspruch 9, **dadurch gekennzeichnet, dass** sie zwei Verbindungsunterstützungen (10) mit dem Auslöseschlitz (10.a) und eine Verbindungsunterstützung mit dem Verbindungsloch (9) umfasst.

11. Eine Federbremskammer (12) gemäß einem der Ansprüche 1-3 oder 7-10, **dadurch gekennzeichnet, dass** sie einteilig ist.

## Revendications

1. Chambre de frein à ressort (12) ayant deux appareils de connexion d'air (1) pour connecter les sources d'air à une chambre d'air à ressort (12) par des entrées d'air (12a) de la chambre de frein à ressort (12), **caractérisée par**
▪ L'appareil de connexion d'air (1) comprend au moins une conduite d'air (5), dont une extrémité est agencée pour être une tête de connexion d'air (2.a) à connecter à une source d'air et dont l'autre extrémité est agencée pour être une tête de connexion de chambre (2) à connecter à la chambre de frein à ressort (12) et qui est inclinée par rapport à la tête de connexion d'air (2. a), et qui comprend au moins un canal d'air (7) s'étendant de la tête de connexion de la chambre (2) à la tête de connexion de l'air (2.a) pour permettre le passage de l'air et un canal primaire (6) formé dans le diamètre extérieur de ladite tête de connexion de la chambre (2) pour permettre à un circlip (6a) d'être inséré,
▪ au moins un support de connexion (10) connectant deux conduites d'air (5) et au moins un trou de connexion (9) sur le support de connexion (10) pour permettre à l'appareil de connexion d'air (1) de se connecter à la chambre de frein à ressort (12) par un élément de connexion à goujon (9a) et le deuxième élément de connexion (9b),
▪ un canal secondaire (12b) formé sur la surface intérieure de l'entrée d'air (12a) dans lequel ledit canal secondaire (12b) est positionné pour être opposé au canal primaire (6), lorsque la tête de connexion de la chambre (2) est complètement insérée dans l'entrée d'air (12a).

2. Chambre de frein à ressort (12) selon la revendication 1, **caractérisée en ce que** la tête de connexion de la chambre (2) est perpendiculaire à la tête de connexion de l'air (2.a).

3. Chambre de frein à ressort (12) selon la revendication 1, **caractérisée en ce qu'**elle comprend un canal d'étanchéité (8) formé dans le diamètre extérieur de ladite tête de connexion de chambre (2) pour permettre à un élément d'étanchéité (8a) d'être inséré.

4. Chambre de frein à ressort (12) selon la revendication 3, **caractérisée en ce qu'**elle comprend un élément d'étanchéité (8a) situé dans le canal d'étanchéité (8).

5. Chambre de frein à ressort (12) selon la revendication 4, **caractérisée en ce que** l'élément d'étanchéité (8a) est un joint torique.

6. Chambre de frein à ressort (12) selon la revendication 1, **caractérisée en ce qu'**elle comprend un circlip (6a) situé dans le canal primaire (6).

7. Chambre de frein à ressort (12) selon la revendication 1, **caractérisée en ce qu'**elle comprend au moins deux supports de connexion (10).

8. Chambre de frein à ressort (12) selon la revendication 1 ou 7, **caractérisée en ce qu'**elle comprend une fente de boulon de déclenchement (10.a) sur le support de connexion (10).

9. Chambre de frein à ressort (12) selon l'une quelconque des revendications 1, 7 ou 8, **caractérisée en ce qu'**elle comprend au moins trois supports de connexion (10).

10. Chambre de frein à ressort (12) selon la revendication 9, **caractérisée en ce qu'**elle comprend deux supports de connexion (10) avec la fente du boulon de déclenchement (10.a) et un support de connexion avec le trou de connexion (9).

11. Chambre de frein à ressort (12) selon l'une quelconque des revendications 1-3 ou 7-10, **caractérisée en ce qu'**elle est d'une seule pièce.
